# EUROPEAN PATENT APPLICATION

(11) **EP 3 438 884 A1**
(43) Date of publication of application: **06.02.2019**
(21) Application number: 17774146.9
(22) Date of filing: 08.03.2017
(51) Int. Cl.: G06K 13/067, G06K 7/10

(54) **CARD READER**

(30) Priority: 31.03.2016 JP 2016071672
(71) Applicant: Nidec Sankyo Corporation, Suwa-gun, Nagano 393-8511 (JP)
(72) Inventor: HIGASHI, Katsuhisa, Suwa-gun Nagano 393-8511 (JP); SHIMIZU, Yohei, Suwa-gun Nagano 393-8511 (JP)
(74) Representative: 2K Patentanwälte Blasberg Kewitz & Reichel
(86) International application number: PCT/JP2017/009309
(87) International publication number: WO 2017/169601

(57) **Abstract**

The purpose of the present invention is to provide a card reader which, when the power is off, cannot illicitly acquire magnetic information of a magnetic card via a pre-head. This card reader 1 is provided with: a pre-head 50 which detects change in the magnetic field by means of magnetoresistive elements 21, 22; a voltage applying circuit 23 which applies a voltage to the pre-head 50; and a reference voltage circuit 30 which superimposes a reference voltage VO onto the voltage signal S1 from the pre-head 50; the card reader is also provided with a signal processing circuit 24 which outputs a detection signal S4 on the basis of the difference between the voltage signal S1 and the reference voltage VO. Further, the card reader 1 is provided with a coupling capacitor 26 which is inserted between the pre-head 50 and the signal processing circuit 24, and a switching circuit 27 which connects the coupling capacitor 26 and the signal processing circuit 24 at the same time that voltage is applied to the pre-head 50 from the voltage applying circuit 23.

## Description

### TECHNICAL FIELD

The present invention relates to a card reader including a pre-head configured to detect a change in magnetic field by a magnetoresistive element.

### BACKGROUND ART

Patent Literature 1 discloses a card reader that reads magnetic information from a magnetic card including a magnetic track. The card reader disclosed in Patent Literature 1 includes a card insertion slot, a magnetic head for reading magnetic information, a card conveying passage extending from the card insertion slot via the read position where the magnetic head performs reading, and a conveying mechanism that conveys a magnetic card along the card conveying passage. The card reader also includes a pre-head that detects whether magnetic information is recorded on a magnetic stripe of a magnetic card inserted into the card insertion slot. The detection position where the pre-head performs detection is set to be closer to the card insertion slot than the read position.

The pre-head disclosed in Patent Literature 1 includes a core having a gap and a coil wound around the core. When a magnetic card having magnetic information recorded thereon passes through the gap, voltage signals with an amplitude corresponding to a change in magnetic field are output from the two ends of the coil. The card reader determines whether the magnetic information is stored in the magnetic card based on the voltage signals from the pre-head. When it is determined that the magnetic information is stored in the magnetic card, the card reader drives the conveying mechanism to convey the magnetic card along the card conveying passage. The card reader then obtains the magnetic information from the magnetic card passing through the read position.

### CITATION LIST

### PATENT LITERATURE

Patent Literature 1: Japanese Patent Application Publication No. 2010-205187

### SUMMARY OF THE INVENTION

### PROBLEMS TO BE SOLVED BY THE INVENTION

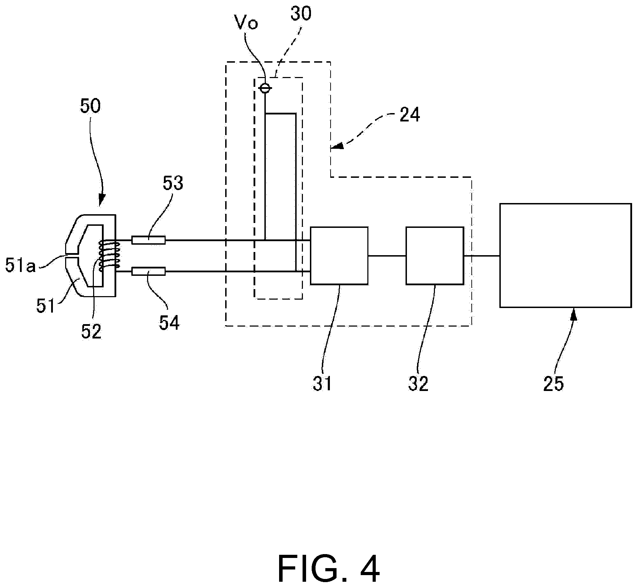

Fig. 4 is a schematic block diagram of a control system of a pre-head 50 in a card reader. The control system is configured to determine whether magnetic information is stored in a magnetic card, and the card reader includes the pre-head 50 having a core 51 with a gap 51a and a coil 52 wound around the core 51.

As shown in Fig. 4, the control system of the pre-head 50 includes the pre-head 50, a signal processing circuit 24 that outputs a detection signal based on a voltage signal output from the pre-head 50, and a control unit 25 that determines whether magnetic information is recorded on a magnetic card inserted into a card insertion slot based on a detection signal. The signal processing circuit 24 includes an amplifier circuit 31 that amplifies voltage signals output from a first terminal 53 connected to one end of the coil 52 and a second terminal 54 connected to the other end of the coil 52, a comparator circuit 32 that compares an amplified signal having been amplified by the amplifier circuit 31 to a predetermined threshold and outputs a detection signal when the amplified signal is equal to or larger than the threshold, and a reference voltage circuit 30 that sets the reference potential of the amplitude of a voltage signal input to the amplifier circuit 31 to a reference voltage VO when a magnetic card is not inserted into the card insertion slot (when the pre-head 50 does not detect a change in magnetic field). The reference voltage circuit 30 superimposes the reference voltage VO on a voltage signal from the pre-head 50. The control unit 25 determines whether magnetic information is recorded on a magnetic card based on the number of times that the detection signal is output from the signal processing circuit 24 or the like when the magnetic card is inserted into the card insertion slot.

It is not necessary to supply a power to a pre-head that includes a core and a coil. Consequently, when a magnetic card passes through a gap in the core, a voltage signal corresponding to a change in magnetic field is always output from the pre-head. If a malicious user moves the magnetic card to pass through the gap in the pre-head for the purpose of obtaining a voltage signal output from the pre-head when a card reader is not switched on or the like, the malicious user may illegally obtain magnetic information having been recorded on the magnetic card.

The present invention has been achieved in view of the above problems, and an object of the invention is to provide a card reader in which magnetic information recorded on a magnetic card cannot be illegally obtained through a pre-head when the power supply is not switched on.

### MEANS FOR SOLVING THE PROBLEM

In order to solve the above problems, a card reader according to the present invention includes a pre-head that detects a change in magnetic field by a magnetoresistive element, a voltage applying circuit that applies an applied voltage set in advance to the pre-head, a signal processing circuit that includes a reference voltage circuit configured to superimpose a reference voltage on a voltage signal from the pre-head and outputs a detection signal based on a difference between the voltage signal and the reference voltage, a capacitor inserted between the pre-head and the reference voltage circuit, a switching circuit that switches a state of the capacitor and the reference voltage circuit from a disconnected state to a connected state simultaneously with application of the applied voltage from the voltage applying circuit to the pre-head, and a control unit that determines whether magnetic information is recorded on a magnetic stripe of a magnetic card inserted into a card insertion slot based on the detection signal.

According to the present invention, the pre-head detects a change in magnetic field by the magnetoresistive element. The magnetoresistive element changes its resistance value based on a change in magnetic field and outputs the change in magnetic field as a change in voltage when a voltage is applied thereto. Consequently, when no voltage is applied to the pre-head, the pre-head does not output a voltage signal even if the magnetic card passes through the detection position where the pre-head performs detection. When a power supply for the card reader is not switched on (when no voltage is applied to the pre-head), it is thus difficult to obtain magnetic information on the magnetic card through the pre-head.

If a control system of a pre-head including a core and a coil can be used as a control system of the pre-head that performs a determination operation whether magnetic information is stored in the magnetic card, changes in the conventional card reader can be reduced. It is thus possible to reduce risk when the pre-head is replaced by the pre-head that detects a change in magnetic field by the magnetoresistive element.

However, when the pre-head that detects a change in magnetic field by the magnetoresistive element is used while the configuration of the control system of the pre-head is the same as that of the conventional one, in order to set the reference potential of the amplitude of a voltage signal output from the pre-head to a reference voltage, the capacitor must be inserted between the pre-head and the reference voltage circuit for the purpose of compensating for an error between the voltage signal output from the pre-head and the reference voltage.

In addition, when the capacitor is inserted between the pre-head and the reference voltage circuit, the capacity of the capacitor must be set to be relatively large for the purpose of preventing a frequency component necessary for the determination operation of whether or not the magnetic information is recorded from a voltage signal input from the pre-head to the signal processing circuit from being cut off by a filter effect due to insertion of the capacitor. Herein, when the capacity of the capacitor is increased, the time from a time point when a voltage is applied to the pre-head to a time point when a voltage signal from the pre-head is input via the capacitor to the signal processing circuit (a start-up time of the pre-head) is extended, and thus it takes a long time to perform the determination operation of whether or not the magnetic information is recorded on the magnetic card inserted into the card insertion slot.

In order to solve such problems, the present invention includes the switching circuit that connects the capacitor to the reference voltage circuit simultaneously with application of the applied voltage from the voltage applying circuit to the pre-head. It is possible to reduce, simultaneously with the application of the applied voltage to the pre-head, the difference between the potential of the capacitor on a side of the pre-head and the potential of the capacitor on the opposite side to the pre-head and thus it is possible to reduce the saturation time of the capacitor. As a result, it is possible to reduce the time from the time point when a voltage is applied to the pre-head to the time point when a voltage signal from the pre-head is input via the capacitor to the signal processing circuit and thus it is possible to quickly perform the determination operation of whether or not the magnetic information is recorded on the magnetic card inserted into the card insertion slot.

According to the present invention, the switching circuit includes a first switching element that connects and disconnects the voltage applying circuit to and from the pre-head and a second switching element that connects and disconnects the capacitor to and from the signal processing circuit. The first switch and the second switch are simultaneously switched from a disconnected state to a connected state.

In this case, a detector that mechanically or optically detects the magnetic card inserted into the card insertion slot is further included. When the detector detects the magnetic card, the first switch and the second switch are simultaneously switched from a disconnected state to a connected state. Consequently, when the magnetic card is inserted into the insertion slot, the voltage applying circuit is connected to the pre-head to apply the applied voltage to the pre-head. In addition, the capacitor is connected to the signal processing circuit simultaneously with the application of the applied voltage to the pre-head, and thus the potential of the capacitor on the opposite side to the pre-head is the reference voltage.

In this case, a human sensor that detects a movement of a user is further included. When the human sensor detects a movement of the user, it is preferable that the first switch and the second switch are simultaneously switched from a disconnected state to a connected state. Consequently, when the user of the card reader is detected, the voltage applying circuit is connected to the pre-head to apply the applied voltage to the pre-head. In addition, the capacitor is connected to the signal processing circuit simultaneously with the application of the applied voltage to the pre-head, and thus the potential of the capacitor on the opposite side to the pre-head is the reference voltage.

According to the present invention, each of the first switching element and the second switching element is preferably an analog switch. As the analog switch is used for the switching elements, the resistance of the switching element when switched on is reduced. It is thus possible to prevent the switching elements from affecting characteristics of the magnetoresistive element.

According to the present invention, a first magnetoresistive element and a second magnetoresistive element serially connected to each other are included as the magnetoresistive element. The applied voltage is applied from the voltage applying circuit to a side of the first magnetoresistive element opposite to the second magnetoresistive element and a side of the second magnetoresistive element opposite to the first magnetoresistive element is grounded. The pre-head outputs a voltage at an intermediate point between the first magnetoresistive element and the second magnetoresistive element as the voltage signal. The pre-head can thus output the voltage signal corresponding to a change in magnetic field when the magnetic card passes.

In such a case, the applied voltage may be twice as large as a potential of the reference voltage.
It is thus possible to easily determine the reference potential of the amplitude of a voltage signal output from the pre-head as the reference voltage. In addition, when the capacitor is connected to the signal processing circuit simultaneously with application of the applied voltage from the voltage applying circuit to the pre-head, the two ends of the capacitor have substantially the same potential. The saturation time of the capacitor can be reduced significantly. Consequently, it is possible to further reduce the time from the time point when a voltage is applied to the pre-head to the time point when a signal from the pre-head is input via the capacitor to the signal processing circuit (the start-up time of the pre-head).

### EFFECT OF THE INVENTION

According to the present invention, when no applied voltage is applied to the pre-head, it is difficult to illegally obtain magnetic information on the magnetic card through the pre-head. In addition, according to the present invention, even when the pre-head that detects a change in magnetic field by the magnetoresistive element is used, the control system of the pre-head including a core and a coil can be used. Moreover, the present invention can reduce the start-up time of the pre-head.

### BRIEF DESCRIPTION OF THE DRAWINGS

Fig. 1 show explanatory diagrams of a card reader according to an embodiment of the present invention.
Fig. 2 is a schematic block diagram of a control system of a pre-head.
Fig. 3 show graphs of a start-up time of the pre-head.
Fig. 4 is a schematic block diagram of a control system of a pre-head including a core and a coil.

### MODE FOR CARRYING OUT THE INVENTION

A card reader according to an embodiment of the present invention is described below with reference to the drawings.

### (Overall Configuration)

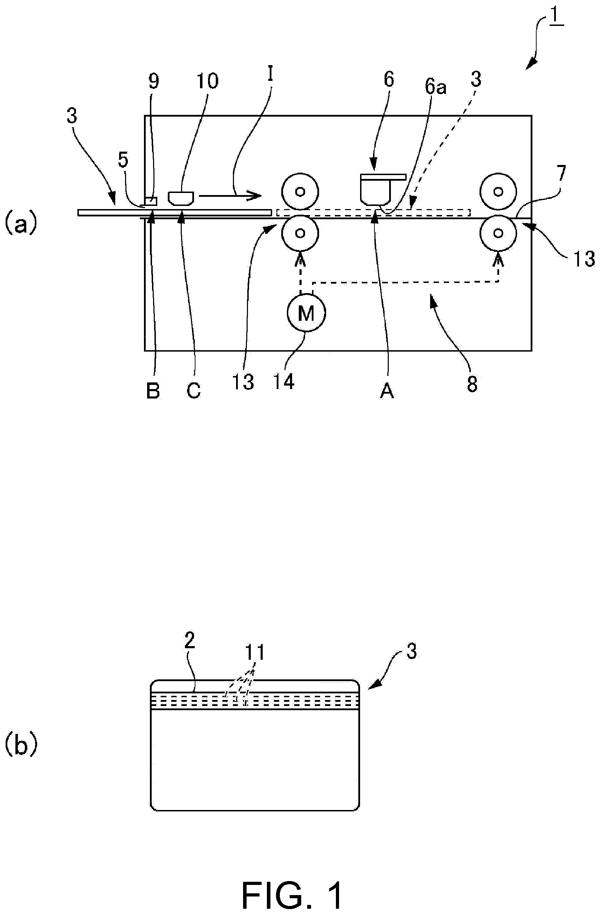

Fig. 1(a) is an explanatory diagram of a card reader according to an embodiment of the present invention. Fig. 1(b) is an explanatory diagram of a magnetic card. A card reader 1 according to the present embodiment reads a magnetic card 3 having a magnetic stripe 2 to obtain magnetic information recorded on the magnetic stripe 2. As shown in Fig. 1(a), the card reader 1 includes a card insertion slot 5, a magnetic head 6 for reading magnetic information, a card conveying passage 7 extending from the card insertion slot 5 via a read position A where the magnetic head 6 performs reading, and a conveying mechanism 8 that conveys the magnetic card 3 inserted into the card insertion slot 5 along the card conveying passage 7.

The card reader 1 also includes a detector 9 that mechanically detects that the magnetic card 3 has been inserted into the card insertion slot 5 and a pre-head 10 that magnetically detects that the magnetic card 3 has been inserted into the card insertion slot 5. A detection position B where the detector 9 detects the magnetic card 3 corresponds to the card insertion slot 5. A detection position C where the pre-head 10 detects the magnetic card 3 is between the detection position B where the detector 9 detects the magnetic card 3 and the read position A, and is set to be closer to the card insertion slot 5 than the read position A. The detection position C where the pre-head 10 performs detection is near the detection position B where the detector 9 detects the magnetic card 3.

The magnetic head 6 is disposed in a manner that a sensor surface 6a faces the card conveying passage 7. The magnetic head 6 is a three-channel magnetic head 6 that reads three magnetic tracks 11 formed on the magnetic stripe 2 of the magnetic card 3. The conveying mechanism 8 includes two pairs of conveying rollers 13 configured to sandwich the magnetic card 3 therebetween and convey the magnetic card 3. One conveying roller pair 13 is disposed between the detection position C where the pre-head 10 performs detection and the read position A. The other conveying roller pair 13 is disposed to be opposite to the pre-head 10 with the read position A being interposed therebetween. The conveying mechanism 8 also includes a conveying motor 14 functioning as a drive source for the conveying roller pairs 13.

The detector 9 includes a movement member moving while abutting against the magnetic card 3 inserted into the card insertion slot 5 and a switch turned on and off based on the movement of the movement member. The detector 9 may optically detect that the magnetic card 3 has been inserted into the card insertion slot 5.

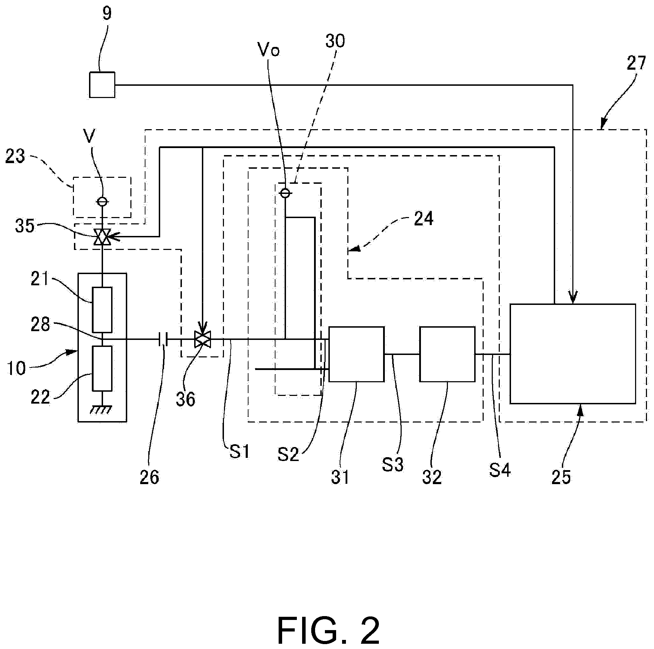

The pre-head 10 detects a change in magnetic field when the magnetic card 3 is inserted into the card insertion slot 5 using magnetoresistive elements 21, 22 (see Fig. 2). More specifically, the pre-head 10 detects a change in magnetic field when one of three magnetic tracks 11 formed on the magnetic stripe 2 of the magnetic card 3 passes through the detection position C using the magnetoresistive elements 21, 22. The magnetoresistive elements 21, 22 are MR elements and are obtained by forming a thin film of a nickel-iron alloy (Ni-Fe) on a surface of a sensor substrate (not shown). The magnetoresistive elements 21, 22 change their resistance value based on a change in magnetic field. The pre-head 10 outputs a change in magnetic field as a voltage signal S1.

When the magnetic card 3 is inserted into the card insertion slot 5, the detector 9 detects the magnetic card 3. When the detector 9 detects the magnetic card 3 having been inserted into the card insertion slot 5, the card reader 1 applies a voltage to the pre-head 10. The card reader 1 then determines whether magnetic information is recorded on the magnetic stripe 2 of the magnetic card 3 based on the voltage signal S1 output from the pre-head 10.

When it is determined that the magnetic information is recorded on the magnetic card 3, the card reader 1 drives the conveying motor 14 to convey the magnetic card 3 along the card conveying passage 7. When the magnetic card 3 passes through the read position A, the card reader 1 reads the magnetic information recorded on the magnetic stripe 2 using the magnetic head 6. That is, when the magnetic card 3 passes through the read position A, a read signal corresponding to a change in magnetic field is output from the magnetic head 6. Consequently, the card reader 1 obtains the magnetic information based on the read signal.

### (Control System of Pre-Head)

Fig. 2 is a schematic block diagram of a control system of the pre-head 10. The control system of the pre-head 10 performs a determination operation whether magnetic information is recorded on the magnetic stripe 2 of the magnetic card 3. The control system of the pre-head 10 includes the detector 9, the pre-head 10, a voltage applying circuit 23, a signal processing circuit 24, and a control unit 25. The control system of the pre-head 10 also includes a coupling capacitor (capacitor) 26 and a switching circuit 27.

As shown in Fig. 2, the pre-head 10 includes a first magnetoresistive element 21 and a second magnetoresistive element 22 as magnetoresistive elements. The first magnetoresistive element 21 and the second magnetoresistive element 22 are disposed on a sensor substrate in a manner that their magnetosensitive directions are aligned with an insertion direction I of the magnetic card 3.

In addition, the first magnetoresistive element 21 and the second magnetoresistive element 22 are disposed in parallel in the insertion direction I. The first magnetoresistive element 21 overlaps the second magnetoresistive element 22 on the sensor substrate as viewed from the insertion direction I of the magnetic card 3. For this reason, when the magnetic card 3 inserted into the card insertion slot 5 passes through the detection position C, one magnetic track 11, which is a reading target, on the magnetic stripe 2 of the magnetic card 3 passes through the first magnetoresistive element 21 and the second magnetoresistive element 22.

The first magnetoresistive element 21 is serially connected to the second magnetoresistive element 22. In the present embodiment, the resistance value of the first magnetoresistive element 21 is set to be equal to the resistance value of the second magnetoresistive element 22. A predetermined applied voltage V is applied from the voltage applying circuit 23 to the side of the first magnetoresistive element 21 opposite to the side that the second magnetoresistive element 22 is disposed. The side of the second magnetoresistive element 22 opposite to the side that the first magnetoresistive element 21 is disposed is grounded. The pre-head 10 outputs, as the voltage signal S1, a voltage at an intermediate point 28 between the first magnetoresistive element 21 and the second magnetoresistive element 22.

The signal processing circuit 24 outputs a detection signal S4 based on the amplitude of the voltage signal S1 output from the pre-head 10. The signal processing circuit 24 includes a reference voltage circuit 30, an amplifier circuit 31, and a comparator circuit 32.

The reference voltage circuit 30 sets the potential of the voltage signal S1 input to the amplifier circuit 31 to a reference voltage VO when the magnetic card 3 is not inserted into the card insertion slot 5 (when the pre-head 10 does not detect a change in magnetic field). That is, the reference voltage circuit 30 is connected between the pre-head 10 and the amplifier circuit 31 and enables the reference voltage VO to be superimposed between the pre-head 10 and the amplifier circuit 31. The reference voltage VO is set to be equal to the voltage at the intermediate point 28 between the first magnetoresistive element 21 and the second magnetoresistive element 22. In the present embodiment, the resistance value of the first magnetoresistive element 21 is equal to the resistance value of the second magnetoresistive element 22 and thus the reference voltage VO is half the applied voltage of the voltage applying circuit 23.

A superimposed voltage signal S2 obtained by superimposing the reference voltage VO on the voltage signal S1 from the pre-head 10 and the reference voltage VO from the reference voltage circuit 30 are input to the amplifier circuit 31. The amplifier circuit 31 includes a differential amplifier and outputs an amplified signal S3 obtained by amplifying the difference between the superimposed voltage signal S2 and the reference voltage VO. The difference between the superimposed voltage signal S2 and the reference voltage VO is equal to the amplitude of the voltage signal S1.

The amplified signal S3 from the amplifier circuit 31 is input to the comparator circuit 32. The comparator circuit 32 compares the amplified signal S3 from the amplifier circuit 31 to a predetermined threshold. When the amplitude of the amplified signal S3 is larger than or equal to the threshold, the comparator circuit 32 outputs the detection signal S4 to the control unit 25.

The coupling capacitor 26 is inserted between the pre-head 10 and the signal processing circuit 24 (the reference voltage circuit 30).

It is difficult to cause the resistance value of the first magnetoresistive element 21 in the pre-head 10 to be strictly equal to the resistance value of the second magnetoresistive element 22 in the pre-head 10. Consequently, it is also difficult to set the potential at the intermediate point 28 between the first magnetoresistive element 21 and the second magnetoresistive element 22 to half the potential of the applied voltage V (the reference voltage VO) when the pre-head 10 does not detect a change in magnetic field. That is to say, it is difficult to cause the resistance value of the first magnetoresistive element 21 to be strictly equal to the resistance value of the second magnetoresistive element 22, and thus it is difficult to set the reference potential of the voltage signal S1 output from the intermediate point 28 between the first magnetoresistive element 21 and the second magnetoresistive element 22 to the reference voltage V0. When it is impossible to accurately set the reference potential of the voltage signal S1, however, it is impossible to accurately determine whether magnetic information is recorded on the magnetic card 3 based on the voltage signal S1. To solve such a problem, the coupling capacitor 26 is inserted between the pre-head 10 (the intermediate point 28) and the signal processing circuit 24 (the reference voltage circuit 30) in the present embodiment and thus an error between the potential at the intermediate point 28 and the potential of the reference voltage VO is compensated for and the reference potential of the voltage signal S1 output from the pre-head 10 is set to the reference voltage VO. The voltage signal S1 thus has an amplitude whose center is at the reference potential (the reference voltage VO). The signal processing circuit 24 thus outputs the detection signal S4 based on the difference between the voltage signal S1 and the reference voltage VO.

In addition, when the coupling capacitor 26 is inserted between the pre-head 10 and the signal processing circuit 24, a frequency band component required for the determination operation of whether or not the magnetic information is recorded may be cut off from the voltage signal S1 input from the pre-head 10 to the signal processing circuit 24 by a filter effect due to insertion of the coupling capacitor 26. For example, when the magnetic card 3 with reduced magnetic recording density due to degraded intensity of magnetization passes through the detection position C at a predetermined speed, the frequency of the voltage signal S1 is lower than that in a case where a normal magnetic card 3 passes through the detection position C at the predetermined speed. In such a case, a low-frequency band component of the voltage signal S1 may be cut off from the voltage signal S1 by the filter effect. To prevent such a case, the capacity of the coupling capacitor 26 is increased in the present embodiment to an extent that the low-frequency band component of the voltage signal S1 is not cut off even in the magnetic card 3 whose intensity of magnetization is reduced to 10%.

The switching circuit 27 includes a first analog switch (first switching element) 35 that connects and disconnects the voltage applying circuit 23 to and from the pre-head 10 and a second analog switch (second switching element) 36 that connects and disconnects the coupling capacitor 26 to and from the signal processing circuit 24. The switching circuit 27 also includes a switching element control unit configured to control on and off of the first analog switch 35 and the second analog switch 36. In the present embodiment, the switching control unit is the control unit 25. The control unit 25 switches on the first analog switch 35 and the second analog switch 35 based on signals from the detector 9.

More specifically, the detector 9 is connected to an input side of the control unit 25. When a signal is input from the detector 9 to the control unit 25, the control unit 25 outputs a control signal to the first analog switch 35 and the second analog switch 36 to simultaneously switch on the switches 35 and 36.

When the first analog switch 35 is switched on, the first analog switch 35 is switched from a disconnected state to a connected state. The voltage applying circuit 23 is thus connected to the pre-head 10 and the applied voltage V is applied from the voltage applying circuit 23 to the pre-head 10. The potential of the applied voltage V is twice as large as the reference voltage VO. Herein, at a time when the applied voltage V is applied to the pre-head 10, the potential at the intermediate point 28 between the first magnetoresistive element 21 and the second magnetoresistive element 22 (the potential of the coupling capacitor 26 on a side of the pre-head 10) is substantially half the applied voltage V and is substantially equal to the reference voltage VO. In addition, when the second analog switch 36 is switched on, the second analog switch 35 is switched from a disconnected state to a connected state. The coupling capacitor 26 is thus connected to the signal processing circuit 24 (the reference voltage circuit 30) and the potential of the coupling capacitor 26 on the opposite side to the pre-head 10 is the reference voltage VO. When the first analog switch 35 and the second analog switch 36 are simultaneously switched on, the potential of the coupling capacitor 26 on the side of the pre-head 10 and the potential of the coupling capacitor 26 on the opposite side to the pre-head 10 become substantially the same potential (the reference voltage VO) at the same time. That is to say, when the first analog switch 35 and the second analog switch 36 are simultaneously switched on, no potential difference is present between the ends of the coupling capacitor 26.

Herein, the capacity of the coupling capacitor 26 is increased in the present embodiment. For this reason, when the coupling capacitor 26 is directly connected to the signal processing circuit 24, the time from when the applied voltage V is applied to the pre-head 10 to when the voltage signal S1 from the pre-head 10 is input via the coupling capacitor 26 to the signal processing circuit 24 (a start-up time of a pre-head) may be extended. In order to handle such a case, the second analog switch 36 is interposed between the coupling capacitor 26 and the signal processing circuit 24, the second analog switch 36 is switched on simultaneously with the application of the applied voltage V to the pre-head 10, so that the ends of the coupling capacitor 26 have substantially the same potential at the same time. The saturation time required for saturation of the coupling capacitor 26 can thus be reduced. It is thus possible to reduce the time from when a voltage is applied to the pre-head 10 to when the voltage signal S1 from the pre-head 10 is input via the coupling capacitor 26 to the signal processing circuit 24 (the start-up time of a pre-head).

Next, the control unit 25 determines whether magnetic information is recorded on the magnetic stripe 2 of the magnetic card 3 based on the number of times that the detection signal S4 is output from the signal processing circuit 24 (the comparator circuit 32) or the like. For example, when the number of times that the detection signal S4 is output from the signal processing circuit 24 exceeds a reference number of times set in advance, the control unit 25 determines that the magnetic information is recorded on the magnetic stripe 2 of the magnetic card 3.

### (Determination Operation of Whether or not the Magnetic Information is Recorded on Magnetic Card)

When the detector 9 detects the magnetic card 3 inserted into the card insertion slot 5, a signal is input from the detector 9 to the control unit 25. The control unit 25 then outputs a control signal to the first analog switch 35 and the second analog switch 36 to simultaneously switch on these switches. As a result, the applied voltage V is applied to the pre-head 10. In addition, the pre-head 10 is connected via the coupling capacitor 26 to the signal processing circuit 24 and the two ends of the coupling capacitor 26 have substantially the same potential.

After that, when the magnetic card 3 is then fully inserted into the card insertion slot 5 and passes through the detection position C, the pre-head 10 detects a change in magnetic field due to the movement of the magnetic card 3 and outputs the voltage signal S1. The voltage signal S1 from the pre-head 10 is input via the coupling capacitor 26 to the signal processing circuit 24.

The signal processing circuit 24 outputs the detection signal S4 based on the amplitude of the voltage signal S1 output from the pre-head 10 (the difference between the voltage signal S1 and the reference voltage VO). The control unit 25 determines whether magnetic information is recorded on the magnetic card 3 based on the detection signal S4 output from the signal processing circuit 24. Herein, when the control unit 25 determines that the magnetic information is recorded on the magnetic card 3, the conveying motor 14 is driven to convey the magnetic card 3 through the read position A.

### (Operations and Effects)

The pre-head 10 detects a change in magnetic field using the magnetoresistive elements 21, 22 in the present embodiment.

Consequently, when no voltage is applied to the pre-head 10, the pre-head 10 does not output the voltage signal S1 even if the magnetic card 3 passes through the detection position C where the pre-head 10 performs detection. When the power supply for the card reader 1 is not switched on (when no voltage is applied to the pre-head 10), it is thus difficult to obtain magnetic information on the magnetic card 3 through the pre-head 10.

In addition, the coupling capacitor 26 is inserted between the pre-head 10 and the signal processing circuit 24 in the present embodiment. The reference potential, which is the reference for the amplitude of the voltage signal S1 from the pre-head 10, is thus the reference voltage VO. It is thus possible to precisely determine whether magnetic information is recorded on the magnetic stripe 2 of the magnetic card 3 inserted into the card insertion slot 5 based on the voltage signal S1 from the pre-head 10.

Herein, when the coupling capacitor 26 is inserted between the pre-head 10 and the signal processing circuit 24, a frequency band component required for a determination operation of whether or not the magnetic information is recorded may be cut off from the voltage signal S1 input from the pre-head 10 to the signal processing circuit 24 by a filter effect due to insertion of the coupling capacitor 26.

In order to handle such a case, the capacity of the coupling capacitor 26 is set to be relatively large in the present embodiment so that a low-frequency component of the voltage signal S1 is not cut off.

In addition, when the capacity of the coupling capacitor 26 is increased, the time from when a voltage is applied to the pre-head 10 to when a signal from the pre-head 10 is input via the coupling capacitor 26 to the signal processing circuit 24 (a start-up time of the pre-head 10) may be extended due to the saturation time of the coupling capacitor 26. In order to handle such a case, when the detector 9 detects the magnetic card 3, in the present embodiment, ends of the coupling capacitor 26 are made to have substantially the same potential simultaneously with application of the applied voltage V to the pre-head 10, so that the saturation time of the coupling capacitor 26 is reduced.

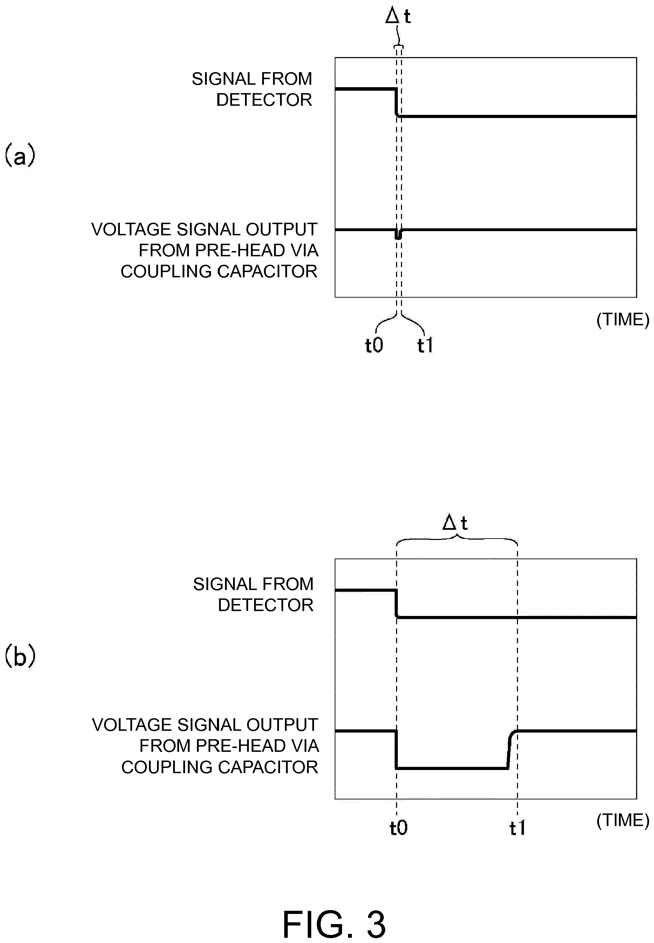

Fig. 3 show graphs of a start-up time of the pre-head 10. Fig. 3(a) shows a case of the present embodiment, that is, a case where when the detector 9 detects the magnetic card 3, the first analog switch 35 and the second analog switch 36 are simultaneously switched on and thus ends of the coupling capacitor 26 have the same potential at the same time. Fig. 3(b) shows a case where a control system of the pre-head 10 does not include the second analog switch 36 and the pre-head 10 is directly connected to the signal processing circuit 24. In the present embodiment shown in Fig. 3(a), a time Δt from a time point t0 when the detector 9 detects the magnetic card 3 (a time point when a voltage is applied to the pre-head 10) to a time point t1 when a signal from the pre-head 10 is input via the coupling capacitor 26 to the signal processing circuit 24 (the start-up time of the pre-head 10) is shorter than that in the case of Fig. 3(b). It is thus possible to quickly perform the determination operation of whether or not the magnetic information is recorded on the magnetic card 3 inserted into the card insertion slot 5.

In addition, the signal processing circuit 24 of the pre-head 50 including the core 51 and the coil 52 (see Fig. 4) can be used in the present embodiment as the control system of the pre-head 10 that performs the determination operation of whether or not the magnetic information is stored in the magnetic card 3. Changes in the control system of the conventional card reader 1 including the pre-head 50 having the core 51 and the coil 52 can thus be reduced. It is thus possible to reduce risk when the pre-head 50 is replaced by the pre-head 10 that detects a change in magnetic field using the magnetoresistive elements 21, 22.

In addition, the pre-head 10 is connected and disconnected to and from circuits on input and output sides of the pre-head 10 using the first analog switch 35 and the second analog switch 36 in the present embodiment. An analog switch has low resistance when connected to a circuit. Consequently, when the first analog switch 35 and the second analog switch 36 are simultaneously switched on, it is possible to prevent the first analog switch 35 and the second analog switch 36 from affecting characteristics of the magnetoresistive elements 21, 22.

### (Other Embodiments)

The magnetoresistive elements 21, 22 may be obtained by, for example, forming a thin film of a nickel-cobalt alloy (Ni-Co) on a surface of a sensor substrate.

In addition, instead of the first analog switch 35 and the second analog switch 36, a switching element such as a relay may be used.

Furthermore, in the switching circuit 27, a signal from the detector 9 may be used as a control signal for switching on the first analog switch 35 and the second analog switch 36.

That is, the switching circuit 27 includes a control unit that outputs a control signal for switching on the first analog switch 35 and the second analog switch 36 based on a signal from the detector 9 in the above embodiment. The switching circuit 27 may use a signal from the detector 9 as a control signal for switching on the first analog switch 35 and the second analog switch 36.

In addition, as shown in Figs. 2 and 4, the signal processing circuit 24 of the present embodiment is the same as the one in a case of using the pre-head 50 including the core 51 and the coil 52. The pre-head 10 of the present embodiment that detects a change in magnetic field using the magnetoresistive elements 21, 22 and the pre-head 50 including the core 51 and the coil 52 can be connected to the signal processing circuit 24. Two pre-heads 10, 50 may be connected to the signal processing circuit 24 for exclusive use.

Further, the card reader 1 includes the detector 9 configured to detect that the magnetic card 3 has been inserted into the card insertion slot 5 in the embodiment above described. The card reader 1 may include a human sensor configured to detect movements of a user of the card reader 1 instead of or in addition to the detector 9.

In a case where the card reader 1 includes a human sensor, when the human sensor detects movements of a user, the first analog switch 35 and the second analog switch 36 may be simultaneously switched from a disconnected state to a connected state. Specifically, the human sensor is connected to an input side of the control unit 25. When a signal is input from the human sensor to the control unit 25, the control unit 25 outputs a control signal to the first analog switch 35 and the second analog switch 36 to switch on these switches at the same time. Alternatively, the first analog switch 35 and the second analog switch 36 may be switched on at the same time by using a signal from the human sensor as a control signal.

In this case, assuming that the side of the card reader 1 on which the card insertion slot 5 is disposed in the insertion direction I of the magnetic card 3 is the front side, the human sensor is disposed near the card insertion slot 5 in a manner that its detection direction is directed to the front side of the card reader 1. The human sensor is, for example, an infrared sensor. With such a configuration, when a user of the card reader 1 is detected, the voltage applying circuit 23 is connected to the pre-head 10 and an applied voltage is applied to the pre-head 10. In addition, the capacitor 26 is connected to the signal processing circuit 24 simultaneously with application of the applied voltage to the pre-head 10, and the potential of the capacitor 26 on the opposite side to the pre-head 10 is the reference voltage V0.

### DESCRIPTION OF REFERENCE NUMERALS

- 1:: Card reader
- 2:: Magnetic stripe
- 3:: Magnetic card
- 5:: Card insertion slot
- 9:: Detector
- 10:: Pre-head
- 21:: First magnetoresistive element
- 22:: Second magnetoresistive element
- 23:: Voltage applying circuit
- 24:: Signal processing circuit
- 25:: Control unit
- 26:: Coupling capacitor (capacitor)
- 27:: Switching circuit
- 28:: Intermediate point
- 33:: Reference voltage circuit
- 35:: First analog switch (first switching element)
- 36:: Second analog switch (second switching element)
- V0:: Reference voltage

## Claims

1. A card reader comprising:
a pre-head that detects a change in magnetic field by a magnetoresistive element;
a voltage applying circuit that applies an applied voltage set in advance to the pre-head;
a signal processing circuit that includes a reference voltage circuit configured to superimpose a reference voltage on a voltage signal from the pre-head and outputs a detection signal based on a difference between the voltage signal and the reference voltage;
a capacitor inserted between the pre-head and the reference voltage circuit;
a switching circuit that switches a state of the capacitor and the reference voltage circuit from a disconnected state to a connected state simultaneously with application of the applied voltage from the voltage applying circuit to the pre-head; and
a control unit that determines whether magnetic information is recorded on a magnetic stripe of a magnetic card inserted into a card insertion slot based on the detection signal.

2. The card reader according to claim 1, wherein
the switching circuit includes a first switching element that connects and disconnects the voltage applying circuit to and from the pre-head and a second switching element that connects and disconnects the capacitor to and from the signal processing circuit, and
the first switch and the second switch are simultaneously switched from a disconnected state to a connected state.

3. The card reader according to claim 2, further comprising a detector that mechanically or optically detects the magnetic card inserted into the card insertion slot, wherein
when the detector detects the magnetic card, the first switch and the second switch are simultaneously switched from a disconnected state to a connected state.

4. The card reader according to claim 2, further comprising a human sensor that detects a movement of a user, wherein
when the human sensor detects a movement of the user, the first switch and the second switch are simultaneously switched from a disconnected state to a connected state.

5. The card reader according to any one of claims 2 to 4, wherein each of the first switching element and the second switching element is an analog switch.

6. The card reader according to any one of claims 1 to 5, further comprising a first magnetoresistive element and a second magnetoresistive element serially connected to each other as the magnetoresistive element,
wherein
the applied voltage is applied from the voltage applying circuit to a side of the first magnetoresistive element opposite to the second magnetoresistive element and a side of the second magnetoresistive element opposite to the first magnetoresistive element is grounded, and
the pre-head outputs a voltage at an intermediate point between the first magnetoresistive element and the second magnetoresistive element as the voltage signal.

7. The card reader according to claim 6, wherein the applied voltage is twice as large as a potential of the reference voltage.
